(19) **Europäisches Patentamt / European Patent Office / Office européen des brevets**

(11) **EP 4 687 075 A1**

(12) ## EUROPEAN PATENT APPLICATION

(43) Date of publication:
**04.02.2026 Bulletin 2026/06**

(21) Application number: **25184355.3**

(22) Date of filing: **23.06.2025**

(51) International Patent Classification (IPC):
**G06N 3/084** (2023.01)      **G06N 3/09** (2023.01)
**G06N 3/0985** (2023.01)

(52) Cooperative Patent Classification (CPC):
**G06N 3/084; G06N 3/09; G06N 3/0985**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **31.07.2024  IN 202421058040**

(71) Applicant: **Tata Consultancy Services Limited Maharashtra (IN)**

(72) Inventors:
- **MISHRA, Aayush**
  **411057 Pune (IN)**
- **DESHPANDE, Parijat Dilip**
  **411028 Pune (IN)**
- **RAI, Beena**
  **411028 Pune (IN)**
- **PATWARDHAN, Manasi Samarth**
  **411057 Pune (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR MODEL AGNOSTIC META-ORDINAL REGRESSION**

(57)    The conventional multi-task ordinal regression techniques require large training data and are not specifically suitable for the dynamic data distribution settings. Embodiments herein provide a method and system for a model agnostic meta-ordinal regression (MAMOR). The method utilizes meta-learning along with ordinal regression and develops a loss function tailored to a specific problem of multi-task multi-class image classification utilizing minimal training data. The disclosed method trains a MAMOR based Artificial Neural Network (ANN model) on a plurality of tasksets by utilizing a Dynamic Multi-Task-Conditional Ordinal Regression (DMT-CORN) loss function for handling the dynamic data distribution settings.

**FIG. 2**

**Description**

CROSS-REFERENCE TO RELATED APPLICATIONS AND PRIORITY

The present application claims priority to Indian application no. 202421058040, filed on July 31, 2024.

TECHNICAL FIELD

The disclosure herein generally relates to meta ordinal regression, and, more particularly, to a method and system for model agnostic meta-ordinal regression.

BACKGROUND

Since the advent of Convolutional Neural Networks (CNNs) computer vision based deep learning techniques are utilized for multi-object multi-class classification. However, in various real-world scenarios the existing techniques were limited to binary classification of the objects due to scarcity of large, annotated datasets that deep learning models require for training. The existing techniques which involved multi-class classification requires developing deep learning models which were highly bespoke for a given type of object and were not easily generalizable to multiple types of objects. Further training and optimizing numerous deep learning models for the multiple types of objects is infeasible and inefficient. Also, in many real-world cases, the data for multiple types of objects is dynamically available over time rather than the entire dataset being available at once. The existing deep learning methods thus lack approaches for multi-object multi-class classification utilizing limited and dynamically distributed training dataset.

SUMMARY

Embodiments of the present disclosure present technological improvements as solutions to one or more of the above-mentioned technical problems recognized by the inventors in conventional systems. For example, in one embodiment, a method for Model Agnostic Meta-Ordinal Regression (MAMOR) is provided. The method includes receiving a plurality of tasks pertaining to a plurality of objects annotated with a plurality of image class labels. The plurality of tasks comprises dynamically distributed data received sequentially at a timestamp amongst a plurality of time stamps, in a plurality of tasksets. Each of the plurality of tasksets comprises a plurality of images associated with the plurality of objects. Each task of the plurality of tasks in a taskset of the plurality of tasksets comprises the plurality of images corresponding to an object of the plurality of objects. Further the method includes converting, the plurality of image class labels with a first dimension (c) corresponding to the plurality of images in a training dataset to a plurality of vector ordinal levels of a second dimension (c - 1), to incorporate an ordinal information of the plurality of image class labels for training a MAMOR based Artificial Neural Network (ANN) model. Furthermore, the method includes randomly initializing a plurality of model parameters of the MAMOR based ANN model comprising a plurality of one or more weights and a plurality of biases. Furthermore, the method includes initializing the MAMOR based ANN model with a plurality of hyper-parameter values comprising a learning rate, a ratio of division of training data into a support dataset and a query dataset, and a strength of a Kullback-Leibler (KL) divergence in a Dynamic Multi - Task-Conditional Ordinal Regression (DMT-CORN) loss function. Further the method includes training the MAMOR based ANN model with each of the image of the plurality of images associated to each task of the plurality of tasks corresponding to each taskset of the plurality of tasksets of the training dataset. Training the MAMOR based ANN model comprises a stage-1 training and a stage-2 training. The stage-1 training of the MAMOR based ANN model with each task of the plurality of tasks in the taskset of the plurality of tasksets comprises: feeding each of the image of the plurality of images of the support dataset of the training dataset and the associated plurality of vector ordinal levels to the MAMOR based ANN model; computing a Conditional Ordinal Regression (CORN) loss function for the task with respect to the plurality of model parameters ($\theta$) using the support dataset; updating the plurality of model parameters using a gradient descent technique to obtain a plurality of updated model parameters $(\theta_i')$, using the CORN loss function; and obtaining a task specific trained MAMOR based ANN model of the plurality of task specific trained MAMOR based ANN models, using the plurality of updated model parameters $(\theta_i')$. The stage-2 training of the MAMOR based ANN model with each task of the plurality of tasks in the taskset of the plurality of tasksets, to generate the trained MAMOR based ANN model comprises: feeding each of the image of the plurality of images of the query dataset of the training dataset and the associated plurality of vector ordinal levels to the MAMOR based ANN model; appending the KL divergence to the CORN loss function for handling a multi task setting with the dynamic data distribution, to generate the DMT-CORN loss function; computing the DMT-CORN loss function using the query dataset, the plurality of model parameters, and the plurality of task specific trained MAMOR based ANN models trained using the support dataset in the stage-1 training; updating the plurality of model parameters by minimizing the DMT-CORN loss function, using a gradient descent technique to obtain the plurality of updated model parameters ($\theta'$); and obtaining the trained MAMOR based ANN model using the plurality of updated model parameters.

In another aspect, a system for Model Agnostic Meta-Ordinal Regression (MAMOR) is provided. The system comprising: a memory storing instructions; one or more communication interfaces; and one or more hardware processors coupled to the memory via the one or more communication interfaces, wherein the one or more hardware processors are configured by the instructions to: receive a plurality of tasks pertaining to a plurality of objects annotated with a plurality of image class labels, wherein the plurality of tasks comprises a dynamically distributed data received sequentially at the timestamp amongst the plurality of time stamps, in a plurality of tasksets, wherein each of the plurality of tasksets comprises a plurality of images associated with the plurality of objects, wherein each task of the plurality of tasks in a taskset of the plurality of tasksets comprises a plurality of images corresponding to an object of the plurality of objects; convert the plurality of image class labels with a first dimension ($c$) corresponding to the plurality of images in a training dataset to a plurality of vector ordinal levels of a second dimension ($c$ - 1), to incorporate an ordinal information of the plurality of image class labels for training a Model Agnostic Meta Ordinal Regression (MAMOR) based Artificial Neural Network (ANN) model; randomly initialize a plurality of model parameters of the MAMOR based ANN model comprising a plurality of one or more weights and a plurality of biases; initialize the MAMOR based ANN model with a plurality of hyper-parameter values comprising a learning rate, a ratio of division of training data into a support dataset and a query dataset, and a strength of a Kullback-Leibler (KL) divergence in a Dynamic Multi -Task-Conditional Ordinal Regression (DMT-CORN) loss function; and train the MAMOR based ANN model with each of the image of the plurality of images associated to each task of the plurality of tasks corresponding to each taskset of the plurality of tasksets of the training dataset, wherein training the MAMOR based ANN model comprises a stage-1 training and a stage-2 training, wherein the stage-1 training of the MAMOR based ANN model with each task of the plurality of tasks in the taskset of the plurality of tasksets comprises: feeding each of the image of the plurality of images of the support dataset of the training dataset and the associated plurality of vector ordinal levels to the MAMOR based ANN model; computing a Conditional Ordinal Regression (CORN) loss function for the task with respect to the plurality of model parameters ($\theta$) using the support dataset; updating the plurality of model parameters using a gradient descent technique to obtain a plurality of updated model parameters $(\theta_i')$, using the CORN loss function; and obtaining a task specific trained MAMOR based ANN model of the plurality of task specific trained MAMOR based ANN models, using the plurality of updated model parameters $(\theta_i')$, wherein the stage-2 training of the MAMOR based ANN model with each task of the plurality of tasks in the taskset of the plurality of tasksets, to generate the trained MAMOR based ANN model comprises: feeding each of the image of the plurality of images of the query dataset of the training dataset and the associated plurality of vector ordinal levels to the MAMOR based ANN model; appending the KL divergence to the CORN loss function for handling a multi task setting with the dynamic data distribution, to generate the DMT-CORN loss function; computing the DMT-CORN loss function using the query dataset, the plurality of model parameters, and the plurality of task specific trained MAMOR based ANN models trained using the support dataset in the stage-1 training; updating the plurality of model parameters by minimizing the DMT-CORN loss function, using a gradient descent technique to obtain the plurality of updated model parameters ($\theta'$); and obtaining the trained MAMOR based ANN model using the plurality of updated model parameters.

In yet another aspect, there are provided one or more non-transitory machine-readable information storage mediums comprising one or more instructions which when executed by one or more hardware processors cause a method for model agnostic meta-ordinal regression (MAMOR) using dynamic Multi-Task-Conditional Ordinal Regression (DMT-CORN) is provided. The method includes receiving a plurality of tasks pertaining to a plurality of objects annotated with a plurality of image class labels. The plurality of tasks comprises a dynamically distributed data received sequentially at a timestamp amongst a plurality of time stamps, in a plurality of tasksets. Each of the plurality of tasksets comprise a plurality of images associated with the plurality of objects. Each task of the plurality of tasks in a taskset of the plurality of tasksets comprises the plurality of images corresponding to an object of the plurality of objects. Further the method includes converting, the plurality of image class labels with a first dimension ($c$) corresponding to the plurality of images in a training dataset to a plurality of vector ordinal levels of a second dimension ($c$ - 1), to incorporate an ordinal information of the plurality of image class labels for training a Model Agnostic Meta Ordinal Regression (MAMOR) based Artificial Neural Network (ANN) model. Furthermore, the method includes randomly initializing a plurality of model parameters of the MAMOR based ANN model comprising a plurality of one or more weights and a plurality of biases. Furthermore, the method includes initializing the MAMOR based ANN model with a plurality of hyper-parameter values comprising a learning rate, a ratio of division of training data into a support dataset and a query dataset, and a strength of a Kullback-Leibler (KL) divergence in a Dynamic Multi-Task-Conditional Ordinal Regression (DMT-CORN) loss function. Further the method includes training the MAMOR based ANN model with each of the image of the plurality of images associated to each task of the plurality of tasks corresponding to each taskset of the plurality of tasksets of the training dataset. Training the MAMOR based ANN model comprises a stage-1 training and a stage-2 training. The stage-1 training of the MAMOR based ANN model with each task of the plurality of tasks in the taskset of the plurality of tasksets comprises: feeding each of the image of the plurality of images of the support dataset of the training dataset and the associated plurality of vector ordinal levels to the MAMOR based ANN model; computing a Conditional Ordinal Regression (CORN) loss function for the task with respect to the plurality of model parameters ($\theta$) using the support dataset; updating the plurality of model parameters using a gradient descent technique to obtain a plurality of updated model parameters $(\theta_i')$, using the CORN loss function; and obtaining a task specific trained MAMOR based ANN model of the plurality of task specific trained MAMOR based ANN models, using the plurality of updated model parameters $(\theta_i')$. The stage-2 training of the MAMOR based ANN model with each task of the plurality of tasks in the taskset of the plurality of tasksets, to generate the trained MAMOR based ANN model comprises: feeding each of the image of the plurality of images of the query dataset of the training dataset and the associated plurality of vector ordinal levels to the MAMOR based ANN model; appending the KL divergence to the CORN loss function for handling a multi task setting with the dynamic data distribution, to generate the DMT-CORN loss function; computing the DMT-CORN loss function using the query dataset, the plurality of model parameters, and the plurality of task specific trained MAMOR based ANN models trained using the support dataset in the stage-1 training; updating the plurality of model parameters by minimizing the DMT-CORN loss function, using a gradient descent technique to obtain the plurality of updated model parameters ($\theta'$); and obtaining the trained MAMOR based ANN model using the plurality of updated model parameters.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for a Model Agnostic Meta-Ordinal Regression (MAMOR) according to some embodiments of the present disclosure.
FIG. 2 depicts an architecture diagram for the MAMOR, according to some embodiments of the present disclosure.
FIG. 3 is a flow diagram for the MAMOR, using the system of FIG. 1, according to some embodiments of the present disclosure.
FIG. 4 depicts a trained MAMOR based Artificial Neural Network (ANN) model during inference predicting a vector ordinal level of a plurality of vector ordinal levels upon receiving at least one new task, according to some embodiments of the present disclosure.
FIG. 5 depicts test-set accuracy of the trained MAMOR based ANN model, a Model-Agnostic Meta-Learning (MAML) based model, and a transfer learning model.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In various real-world scenarios the existing techniques were limited to binary classification of the objects due to scarcity of large, annotated datasets that deep learning models require for training. The existing techniques which involved multi-class classification required developing deep learning models which were highly bespoke for a given type of object and were not easily generalizable to multiple types of objects. Further training and optimizing numerous deep learning models for the multiple types of objects is infeasible and inefficient. Also, in many real-world cases, the data for multiple types of objects is dynamically available over time rather than the entire dataset being available at once. The existing deep learning methods thus lack approaches for multi-object multi-class classification utilizing limited and dynamically distributed training dataset.

Embodiments herein provide a method and system for Model Agnostic Meta-Ordinal Regression (MAMOR). The method utilizes meta-learning along with ordinal regression and develops a loss function tailored to a specific problem of multi-task multi-class image classification. The multi-task multi-class image classification classifies images of multiple types of objects into multiple quality classes utilizing minimal training data. The objects here correspond to perishable goods or products that tend to deteriorate over time due to their characteristics such as fruits, vegetables, and thereof. The objective of the disclosed invention is to train a single model which works on multiple types of objects and can be easily optimized for unseen types of objects with minimal training.

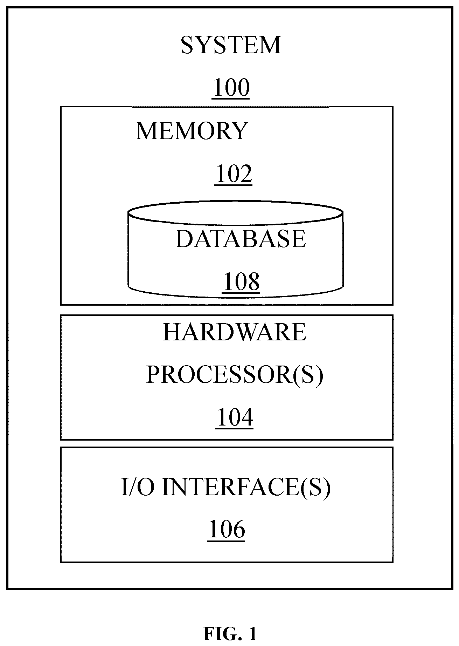

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG. 1 is a functional block diagram of a system 100 for the MAMOR, in accordance with some embodiments of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors.

Referring to the components of the system 100, in an embodiment, the processor (s) 104 can be the one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Thus, the memory 102 may comprise information pertaining to input(s)/output(s) of each step performed by the processor(s) 104 of the system 100 and methods of the present disclosure. In an embodiment, a database 108 is comprised in the memory 102, wherein the database 108 comprises information on a training dataset comprising a plurality of objects, a plurality of image class labels, a plurality of images, a plurality of tasksets, a plurality of timestamps, a learning rate, a plurality of vector ordinal levels, a plurality of model parameters, a support dataset, and a query dataset. The memory 102 further comprises a plurality of modules (not shown for various technique(s) such as a MAMOR based Artificial Neural Network (ANN) model, a Conditional Ordinal Regression (CORN) loss function a Dynamic Multi-Task-Conditional Ordinal Regression (DMT-CORN) loss function, a Kullback-Leibler (KL) divergence, and thereof. The above-mentioned technique(s) are implemented as at least one of a logically self-contained part of a software program, a self-contained hardware component, and/or, a self-contained hardware component with a logically self-contained part of a software program embedded into each of the hardware component (e.g., hardware processor 104 or memory 102) that when executed perform the method described herein. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

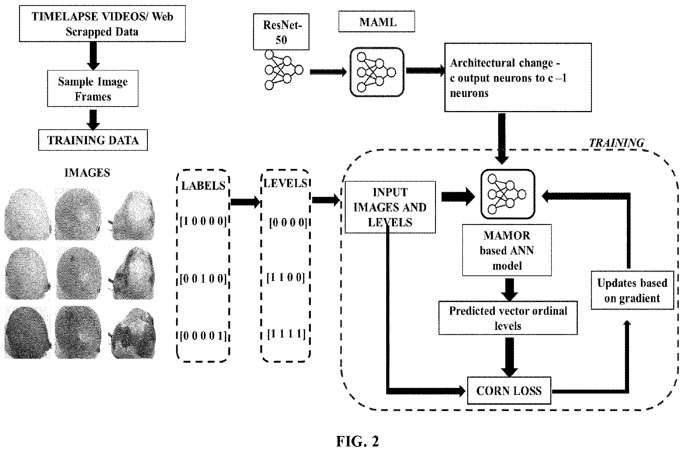

FIG. 2 depicts an architecture diagram for the MAMOR, according to some embodiments of the present disclosure. The plurality of images is extracted from the plurality of timelapse videos and a web scrapped data. Further each image of the plurality of images is annotated with a corresponding image class label of the plurality of image class labels ($c$), to generate the training dataset. Further the plurality of image class labels corresponding to the plurality of images in the training dataset are converted to the plurality of vector ordinal levels, to incorporate an ordinal information of the plurality of image class labels for training the MAMOR based ANN model. Architectural changes are performed on a Model-Agnostic Meta-Learning (MAML) based model in a final output layer which is the base model of the MAMOR based ANN model, to predict the plurality of vector ordinal levels. Further the MAMOR base ANN model is trained on the DMT-CORN loss function for generating a trained MAMOR based ANN model.

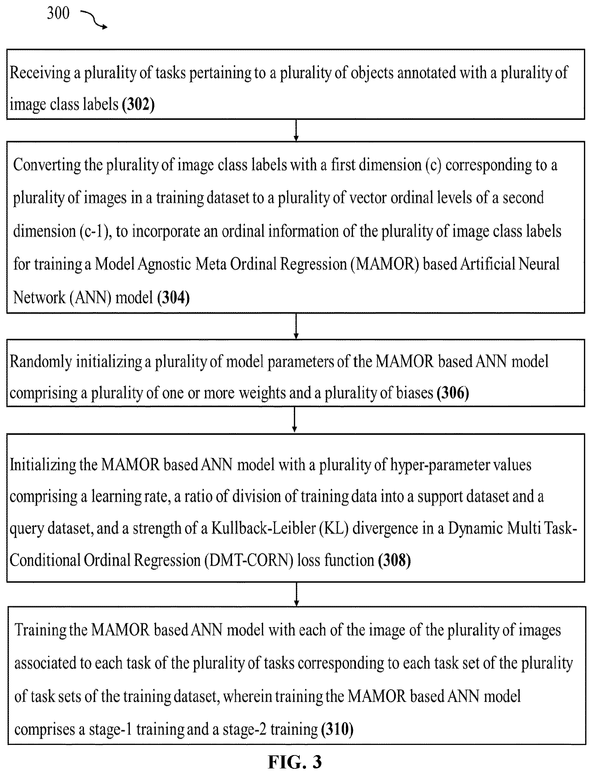

FIG. 3 is a flow diagram for the MAMOR, using the system 100 of FIG. 1, according to some embodiments of the present disclosure.

In an embodiment, the system 100 comprises one or more data storage devices or the memory 102 operatively coupled to the processor(s) 104 and is configured to store instructions for execution of steps of the method 300 by the processor(s) 104. The steps of the method 300 of the present disclosure will now be explained with reference to the components or blocks of the system 100 as depicted in FIG. 1, the architecture diagram depicted in FIG. 2, and the steps of flow diagram as depicted in FIG. 3. Although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to steps of FIG. 3, at step 302 of the method 300, via one or more hardware processors receive, the plurality of tasks pertaining to the plurality of objects annotated with the plurality of image class labels. The plurality of tasks comprises dynamically distributed data received sequentially at a timestamp amongst the plurality of time stamps, in a plurality of tasksets. Each of the plurality of tasksets comprise the plurality of images associated with the plurality of objects. Each task of the plurality of tasks in a taskset of the plurality of tasksets comprise the plurality of images corresponding to an object of the plurality of objects. The plurality of images are extracted from one of (i) the plurality of timelapse videos, (ii) the plurality of web curated images, and (iii) the plurality of lab curated images. Each image of the plurality of images is annotated with the corresponding image class label of the plurality of image class labels (c), to generate the training dataset. The training dataset comprises the support dataset and the query dataset.

At step 304 of the method 300, the one or more hardware processors convert, the plurality of image class labels with a first dimension (c) corresponding to the plurality of images in the training dataset to the plurality of vector ordinal levels of a second dimension (c - 1), to incorporate the ordinal information of the plurality of image class labels for training the MAMOR based ANN model.

The objective of the trained MAMOR based ANN model is to swiftly learn a task with minimal additional data, achieved through training on the plurality of tasks. The base algorithm of the MAMOR is a Model-Agnostic Meta-Learning (MAML) algorithm. The primary task of the MAML algorithm is to optimize a plurality of initial parameters of a training model in a manner that enables it to attain good performance on a new task following parameter adjustments through one or more gradient steps computed with a limited dataset from that task. Using the MAML algorithm, the training model is trained to achieve quick adaptation on the plurality of tasks, a problem in the realm of few-shot learning. The goal of the few-shot meta-learning is to train the training model that can quickly adapt to a new task using only a few datapoints and training iterations. To accomplish this, the training model or learner is trained during a meta-learning phase on the plurality of tasksets, such that the trained model can quickly adapt to new tasks using only a small number of examples or trials. The MAML algorithm considers the MAML based model, denoted $f$, that maps observations $x$ to outputs $a$. During meta-learning, the training model is trained to be able to adapt to the plurality of tasks. In this meta-learning scenario, a distribution over tasks $p(T)$ is considered that the training model to be able to adapt to. In a K-shot learning setting, the training model is trained to learn the new task $T_i$ drawn from $p(T)$ from only $K$ samples drawn from $q_i$ and feedback $L_{T_i}$ generated by $T_i$. During the meta-learning, the task $T_i$ is sampled from $p(T)$, the training model is trained with $K$ samples and feedback from the corresponding loss $L_{T_i}$ from $T_i$, and then tested on new samples from $T_i$. The model $f$ is then improved by considering how the test error on new data from $q_i$ changes with respect to a plurality of parameters. In effect, the test error on sampled tasks $T_i$ serves as the training error of the meta-learning process. At the end of meta-learning, new tasks are sampled from $p(T)$, and meta-performance is measured by the performance of the training model after learning from $K$ samples. Generally, tasks used for meta-testing are held out during meta-training.

Formally, the MAML algorithm considers the MAML based model represented by a parametrized function $f_\theta$ with parameters $\theta$. When adapting to a new task $T_i$, the model's parameters $\theta$ become $\theta_i'$. In the disclosed method 300, the updated parameter vector $\theta_i'$ is computed using one or more gradient descent updates on task $T_i$. For example, when using one gradient update,

$$\theta_i' = \theta - \alpha \nabla_\theta L_{T_i}(f_\theta) \qquad (1)$$

The step size $\alpha$ may be fixed as a hyper-parameter or meta-learned. $\nabla_\theta$ is a gradient operator, which when applied to a function, takes derivative of the function with respect to the plurality of model parameters $\theta$. The model parameters are trained by optimizing for the performance of $f_{\theta_i'}$ with respect to $\theta$ across tasks sampled from $p(T)$. More concretely, the meta-objective is as follows:

$$\min_\theta \ \sum_{T_i \sim p(T)} L_{T_i}\left(f_{\theta_i'}\right) = \sum_{T_i \sim p(T)} L_{T_i}\left(f_\theta - \alpha \nabla_\theta L_{T_i}(f_\theta)\right) \qquad (2)$$

Here a meta-optimization is performed over the plurality of model parameters $\theta$, and the meta-objective is computed using the plurality of updated model parameters $\theta'$. Whereas the disclosed method aims to optimize the plurality of model parameters such that one or a small number of gradient steps on a new task produce(s) maximally effective behavior on that task. The meta-optimization across tasks is performed via stochastic gradient descent (SGD), such that the plurality of model parameters θ are updated as follows:

$$\theta \leftarrow \theta - \beta \nabla_\theta \sum_{T_i \sim p(T)} L_{T_i} \left( f_{\theta_i'} \right) \qquad (3)$$

where $\beta$ is the meta step size.

The pseudo code for the MAML algorithm for the few-shot learning is as follows:

Require: $p(T)$: distribution over tasks
Require: $\alpha, \beta$: step size hyperparameters

1: randomly initialize $\theta$

2: while not done do

3: sample batch of tasks $T_i \sim p(T)$

4: **for all** $T_i$ **do**

5: sample $K$ datapoints $D = \{ X^{(j)}, Y^{(j)} \}$ from $T_i$

6: evaluate $\nabla_\theta L_{T_i}(f_\theta)$ using $D = \{ X^{(j)}, Y^{(j)} \}$ in equation (2) or equation (3)

7: Compute adapted parameters with gradient descent:

8: $\theta_i' = \theta - \alpha \nabla_\theta L_{T_i}(f_\theta)$

9: Sample datapoints $D_i' = \{ X^{(j)}, Y^{(j)} \}$ from $T_i$ for the meta-update

10: **end for**

11: update $\theta \leftarrow \theta - \beta \nabla_\theta \sum_{T_i \sim p(T)} L_{T_i} \left( f_{\theta_i'} \right)$ using $D_i'$ and $L_{T_i}$ in equation (2) and equation (3)

12: **end while**

However, for a problem which requires the multi-task multi-class classification using minimal training data and considering the ordinal relation of classes, several novel and inventive methods need to be devised. Also, the MAML algorithm assumes I.I.D (Independent and Identically Distributed) distribution of data, that is the training data for all tasks should be available beforehand whereas in many real-world cases, the data has the dynamic distribution. The dynamically distributed data assumes that for the data for k types of the plurality of objects is available during the training. However, later, the data for another $r$ types of the plurality of objects becomes available. Now, it is required to update the already trained model parameters in such a way that it gives good performance on the new $r$ types of plurality of objects, while not hindering its performance on previous $k$ types of plurality of objects.

To handle the dynamically distributed data the disclosed method converts the plurality of image class labels with the first dimension ($c$) corresponding to the plurality of images in the training dataset to the plurality of vector ordinal levels of the second dimension ($c$ - 1), to incorporate the ordinal information of the plurality of image class labels for training the MAMOR based ANN model. The MAMOR based ANN model is composed of making architectural changes in the MAML algorithm. The MAML algorithm (lines 1 and 2) is modified to consider the ordering of class labels by replacing the plurality of image class labels with plurality of vector ordinal levels and making architectural changes to the MAML based model to predict a vector ordinal level of the plurality of image class labels. To convert the plurality of image class labels to plurality of vector ordinal levels, it is assumed to have the plurality of image class labels with the first dimension ($c$). So, an image class label $y$ of a datapoint $x \in D$ which is in the $i^{th}$ image class would be an integer $i$. The corresponding vector ordinal label would be $\hat{y} = [y_1, y_2, ..., y_c]$. For $y_i \in \hat{y}$

$$y_i = \begin{cases} 1, & \text{if } x \text{ is a data-point in the } i^{th} \text{ class} \\ 0, & \text{otherwise} \end{cases}$$

The plurality of image class labels ($y$) with the first dimension ($c$) corresponding to the plurality of images in the training dataset are converted to the plurality of vector ordinal levels ($\hat{y}$) using the following equation:

$$\hat{y} = [1] * y + [0] * (c - 1 - y) \qquad (4)$$

For example, in the case of a fruit quality classification, the classes are 'unripe', 'early ripe', 'ripe', 'overripe', and 'rotten'. If $y$ = 3 (i.e. 'ripe' class) and $c$ = 5, then the vector label is $\hat{y}$ = [0,0,1,0,0]and the corresponding vector ordinal level becomes $\hat{y}$ = [1,1,0,0] as per the equation 4. The plurality of vector ordinal levels preserves the ordinality as the task gets converted on predicting an ordinal rank rather than predicting specific class corresponding to an input. The above vector ordinal level $\hat{y}$ = [1,1,0,0] signifies that the image is in a class higher than unripe and early ripe but lower than ripe and overripe. The plurality of vector ordinal levels comprises ranking information corresponding to the plurality of images.

At step 306 of the method 300, the one or more hardware processors randomly initialize, the plurality of model parameters of the MAMOR based ANN model comprising a plurality of one or more weights and a plurality of biases. The random initialization refers to a process of assigning initial values to parameters of a machine learning model randomly. The weights are randomly initialized in a manner, very close to zero.

At step 308 of the method 300, the one or more hardware processors initialize, the MAMOR based ANN model with a plurality of hyper-parameter values comprising a learning rate, a ratio of division of training data into the support dataset and the query dataset, and a strength of the KL divergence in the DMT-CORN loss function.

At step 310 of the method 300, the one or more hardware processors train, the MAMOR based ANN model with each of the image of the plurality of images associated to each task of the plurality of tasks corresponding to each taskset of the plurality of tasksets of the training dataset. The final output layer of the MAMOR based ANN model is modified by removing a neuron from the final output layer of the MAMOR based ANN model such that $c$ - 1 neurons in the final output layer of the MAMOR based ANN model predicts the plurality of vector ordinal levels.

The training of the MAMOR based ANN model comprises a stage-1 training and a stage-2 training. The stage-1 training of the MAMOR based ANN model with each task of the plurality of tasks in the taskset of the plurality of tasksets comprises feeding each of the image of the plurality of images of the support dataset of the training dataset and the associated plurality of vector ordinal levels to the MAMOR based ANN model. Further in the stage-1 training comprises computing a Conditional Ordinal Regression (CORN) loss function for the task with respect to the plurality of model parameters ($\theta$) using the support dataset. Let $D$ = $\{x^{[i]}, y^{[i]}\}_{i=1}^{N}$ denote the training dataset for supervised learning consisting of N training samples. $x^{[i]} \in X$ denotes inputs of the $i^{th}$ training sample and $y^{[i]}$ its corresponding image class label. In an ordinal regression context, $y^{[i]}$ is referred as the rank, where $y^{[i]} \in Y = [r_1, r_2, ... r_k]$ with rank order $r_k > r_{k-1} > ... > r_1$. The objective of the ordinal regression is then to find a mapping $h : X \rightarrow Y$ that minimizes the CORN loss function $L(h)$.

Given the training dataset $D = \{x^{[i]}, y^{[i]}\}_{i=1}^{N}$ the CORN applies a label extension to the rank labels $y^{[i]}$ referred to as the plurality of vector ordinal levels, such that a resulting vector ordinal label $y_k[i] \in \{0, 1\}$ indicates whether $y^{[i]}$ exceeds rank $r_k$. The CORN uses $K$ - 1 learning tasks associated with ranks $r_1, r_2, ... r_k$ referred to as the plurality of vector ordinal levels in the output layer of the MAMOR based ANN model.

The CORN estimates a series of conditional probabilities $\hat{P}(y^{[i]} > r_k \mid y^{[i]} > r_{k-1})$ using a plurality of conditional training subsets such that the output of the $k^{th}$ task $f_k(x^{[i]})$ represents a conditional probability as follows:

$$f_k\left(x^{[i]}\right) = \hat{P}\left(y^{[i]} > r_k \mid y^{[i]} > r_{k-1}\right) \qquad (5)$$

where events are nested as:

$$\{y^{[i]} > r_k\} \subseteq \{y^{[i]} > r_{k-1}\}$$

The events here refer to a process of calculation of conditional probabilities. The transformed unconditional probabilities can then be computed by applying a chain rule for probabilities to model outputs as follows:

$$\hat{P}(y^{[i]} > r_k) = \prod_{j=1}^{k} f_j\left(x^{[i]}\right) \qquad (6)$$

since $\forall j, 0 \leq f_j(x^{[i]}) \leq 1$, then rank consistency among k-1 tasks is guaranteed by:

$$\hat{P}(y^{[i]} > r_1) \geq \hat{P}(y^{[i]} > r_2) \geq \ldots\ldots.. \geq \hat{P}(y^{[i]} > r_{k-1}) \qquad (7)$$

The disclosed method aims to estimate the $f_1(x^{[i]})$ and the conditional probabilities the $f_2(x^{[i]}),\ldots\ldots, f_{k-1}(x^{[i]})$. The conditional probabilities are estimated such as $\hat{P}(y^{[i]} > r_2) \mid \hat{P}(y^{[i]} > r_1)$ using the support dataset of the training dataset where $\{y^{[i]} > r_1\}$. As a result, when there is a binary cross-entropy loss on these conditional subsets, for each task, the estimated output probability has a proper conditional probability interpretation.

To model the conditional probabilities such as $\hat{P}(y^{[i]} > r_k \mid y^{[i]} > r_{k-1})$, only a subset of the training data is considered where $y^{[i]} > r_{k-1}$, this subsets of training data is called as a plurality of conditional training subsets. The plurality of conditional training subsets is constructed for training, which are used in the CORN loss function that is minimized via backpropagation. The plurality of conditional training subsets comprising samples of the support dataset during the stage-1 training and the query-set during the stage-2 training are obtained from the training dataset as follows:

$$S_1 : all \ \{(x^{[i]}, y^{[i]})\}, for \ i \in \{1, \ldots, N\} \qquad S_2 : \{(x^{[i]}, y^{[i]}) \mid y^{[i]} > r_1\} \ \ldots\ldots$$
$$S_{k-1} : (x^{[i]}, y^{[i]}) \mid y^{[i]} > r_{k-2}\}$$

where $N = |S_1| \geq |S_2| \geq \ldots \geq |S_{k-1}|$, and $|S_k|$ denotes the size of $S_k$.

Each conditional training subset $S_k$ is used for training the conditional probability prediction $\hat{P}(y^{[i]} > r_k \mid y^{[i]} > r_{k-1})$ for $k \geq 2$. When $k = 1$, $f_1(x^{[i]})$ represents an initial unconditional probability $f_1(x^{[i]}) = \hat{P}(y^{[i]} > r_1)$.

Let $f_j(x^{[i]})$ denote the predicted value of a $j^{th}$ node in the output layer of the MAMOR based ANN model and let $|S_2|$ denote size of the $j^{th}$ conditional training set. To train the MAMOR based ANN model using backpropagation, the CORN loss function is minimized as follows:

$$L(X, y) = -\frac{1}{\sum_{j=1}^{K-1}|S_j|} \sum_{j=1}^{k-1} \sum_{i=1}^{|S_j|} \left[ log\left(f_j(X^{[i]})\right) . \mathbb{1}\{y^{[i]} > r_j\} + \left(log\left(f_j(X^{[i]})\right) - \right.\right.$$
$$X^{[i]}\right) \mathbb{1}\{y^{[i]} \leq r_j\}\right] \qquad (8)$$

Further in the stage 1 training the plurality of model parameters are updated using a gradient descent technique to obtain a plurality of updated model parameters $(\theta_i')$, using the CORN loss function. Furthermore, a task specific trained MAMOR based ANN model of the plurality of task specific trained MAMOR based ANN models is obtained, using the plurality of updated model parameters $(\theta_i')$.

The stage-2 training of the MAMOR based ANN model with each task of the plurality of tasks in the taskset of the plurality of tasksets, to generate the trained MAMOR based ANN model comprises feeding each of the image of the plurality of images of the query dataset of the training dataset and the associated plurality of vector ordinal levels to the MAMOR based ANN model. Then the KL divergence is appended to the CORN loss function for handling a multi-task setting with the dynamic data distribution, to generate the DMT-CORN loss function. Further in stage-2 training the DMT-CORN loss function is computed using the query dataset, the plurality of model parameters, and the plurality of task specific trained MAMOR based ANN models trained using the support dataset in the stage-1 training.

In the dynamic data distribution, the plurality of model parameters needs to be updated when training on new tasks such that there is no catastrophic interference between old tasks and new tasks, so that the MAMOR based ANN model perform good on both the new tasks and the old tasks. Both the MAML algorithm and the CORN loss function consider the I.I.D data distribution, hence their performance degrades when the data is available dynamically. So, in the disclosed method the CORN loss function is modified in such a way that it considers the dynamic data distribution by adding the KL divergence term which penalizes the MAMOR based ANN model if the plurality of updated model parameters is far away from the plurality of model parameters. The KL divergence is a measure of how one probability distribution diverges from a second expected probability distribution. It's often used in statistics, information theory, and machine learning to quantify the difference between two probability distributions. For discrete probability distributions $P$ and $Q$, the KL divergence is defined as:

$$D_{KL}(P \parallel Q) = \sum_{x \epsilon \chi} P(x) log\left(\frac{P(x)}{Q(x)}\right) \qquad (9)$$

where $P(x)$ and $Q(x)$ are the probabilities of event $x$ according to distributions $P$ and $Q$ respectively.

The summation is over all possible events $x$ in the domain $X$. The KL divergence is non-negative, meaning $D_{KL}(P\|Q) \geq 0$, and equals zero if and only if $P(x) = Q(x)$ for all $x$. A common interpretation of the KL divergence is that it measures the information lost when the distribution $Q$ is used to approximate $P$.

In the case for dynamic distribution of the plurality of tasks, the KL divergence term is added to the CORN loss function. Suppose if a parametric model $f_\theta$ is trained on the existing $k$ tasks. Now, suppose, an additional $r$ tasks have arrived on which the MAMOR based ANN model has to adapt, such that it does not lead to a decrease in its performance on older while also simultaneously achieving good performance on new tasks. The MAMOR based ANN model is meta-trained on new tasks, such that the stage-1 training updates the plurality of model parameters to $f_{\theta_r'}$ (i.e. for 'r' new tasks $\mathcal{T}_r$, 'r' models $(f_{\theta_r'})$ are trained using the support dataset). Now, while calculating the DMT-CORN loss on the query dataset in the stage-2 training, the CORN loss function is modified such that the output on new tasks is calculated using the plurality of task specific trained MAMOR based ANN models trained in the stage-1 training $(f_{\theta_r'})$ as well as the previous model parameters $f_\theta$. The KL divergence is calculated between $f_\theta(x)$ and $f_{\theta_r}'(x)$ which is then added to the CORN loss-function ($L$) such that the new loss function, DMT-CORN loss function ($L'$) becomes:

$$L'(X,y) = L(X,y) + \lambda \times \sum_r f'_{\theta_r}(x_r) \log\left(\frac{f'_{\theta_r}(x_r)}{f_\theta(x_r)}\right) \qquad (10)$$

where $x_r \in X$, and

$x_r$ represents the fraction of input data $X$ in each task $r$

The KL divergence term measures the discrepancy between the predictions of a current model and the predictions of old model on the data from new tasks. The significance of the new term is that it penalizes the MAMOR based ANN model if the plurality of updated model parameters is very distant from the plurality of model parameters, that is the ones which lead to catastrophic forgetting. This new loss function DMT-CORN is only used on the query dataset during the stage-2 training as the stage-1 training is modeled to learn the plurality of updated model parameters which are optimum for individual new tasks in the taskset. $\lambda$ is a hyper-parameter which controls the significance of the KL-divergence term in the DMT-CORN loss function. It can be fine-tuned to optimize the model's performance on current and older tasks.

Further the plurality of model parameters is updated by minimizing the DMT-CORN loss function, using the gradient descent technique to obtain the plurality of updated model parameters and the trained MAMOR based ANN model is obtained using the plurality of updated model parameters.

The pseudocode for MAMOR algorithm is as follows:

Require: $p$: A dynamic distribution of data over tasks

$T = [\mathcal{T}_1, \ldots, \mathcal{T}_n]$: n tasks and each task $\mathcal{T}_i$ has c image class labels. Assume $n$ tasks grouped together sequentially in $r$ groups called task-sets $\ni T = [T_1, \ldots, T_r]$ wherein an arbitrary taskset, $T_k$, comprises of arbitrary tasks $[\mathcal{T}_j, \ldots, \mathcal{T}_{j+k}]$.

Require: $\alpha$, $\beta$: step size hyperparameters

1. Update the final output layer of the MAMOR based ANN model to have $c - 1$ neurons

2. Convert the plurality of image class labels to the plurality of vector ordinal levels using Equation (4)

3. randomly initialize $\theta$

4. **while** not done **do**

5.     sample $T_m \in T$ sequentially

6.     **while** not done **do**

7.         **for all** $\mathcal{T}_i \in T_m$ **do**

8.         sample $K$ datapoints $D = \{ X^{(j)}, Y^{(j)} \}$ from $\mathcal{T}_i$

9.         evaluate $\nabla_\theta L_{\mathcal{T}_i}(f_\theta)$ using $D = \{ X^{(j)}, Y^{(j)} \}$ in equation (8)

10.         compute updated parameters with gradient descent

11.         $\theta'_i = \theta - \alpha \nabla_\theta L_{\mathcal{T}_i}(f_\theta)$

12.         sample datapoints $D'_i = \{ X^{(j)}, Y^{(j)} \}$ from $\mathcal{T}_i$ for the meta-update

13.         **end for**

14.         **if** $m = 1$ **then**

15.         update $\theta \leftarrow \theta - \beta \nabla_\theta \sum_{\mathcal{T}_i \in T_m} L_{\mathcal{T}_i}\left(f_{\theta'_i}\right)$ using $D'_i$ and $L_{T_m}$ in equation (8)

16.         **else**

17.         update $\theta \leftarrow \theta - \beta \nabla_\theta \sum_{\mathcal{T}_i \in T_m} L_{\mathcal{T}_i}\left(f_{\theta'_i}\right)$ using $D'_i$ and $L_{T_m}$ in equation (10)

18.         **end if**

19.         **end while**

20. **end while**

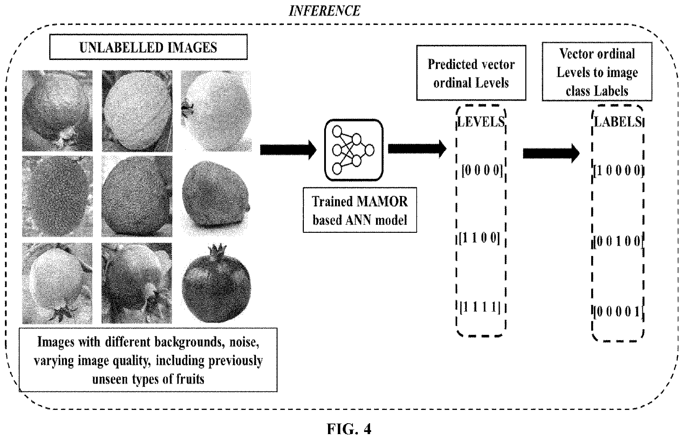

The trained MAMOR based ANN model during inference predicts a vector ordinal level of the plurality of vector ordinal levels upon receiving one or more new tasks. Each of the one or more new tasks comprises an image of a new object. The new object corresponds to perishable goods or products that tend to deteriorate over time due to their characteristics such as fruits, vegetables, and thereof. Consider k tasks $T'_1, T'_2, \ldots T'_k$, were received during the inference stage such that $T' = [T'_1, T'_2, \ldots T'_k]$. These tasks constitute the test set which the trained MAMOR based ANN model has never seen before. The trained MAMOR based ANN model $f_\theta$ is loaded. Input for the trained MAMOR based ANN model would be the plurality of new images. FIG. 4 depicts the trained MAMOR based ANN model during inference predicting the vector ordinal level of the plurality of vector ordinal levels upon receiving at least one new task, according to some embodiments of the present disclosure. The trained MAMOR based ANN model then predicts the vector ordinal levels corresponding to the plurality images. Once the plurality of vector ordinal levels is predicted, they are converted to the plurality of images class labels. To determine the class of the $i^{th}$ data during inference, the predicted conditional probabilities corresponding to the $c$ - 1 tasks are considered. These conditional probabilities are then thresholded at 0.5, and the resulting plurality of image class labels are summed across all the tasks. The class label $y^{[i]}$ of the $i^{th}$ sample is obtained by adding 1 to this sum. To obtain a rank $q$ of the $i^{th}$ sample, and any new data record during inference, the predicted conditional probabilities are thresholded corresponding to the $K$ - 1 tasks and sum the plurality of image class labels as follows:

$$q^{[i]} = 1 + \sum_{j=1}^{K-1} \mathbb{1}\left(\hat{P}\left(y^{[i]} > r_j\right) > 0.5\right) \qquad (11)$$

## Experimental Results

For experimental analysis classification of quality of various fruits into fine-grained classes: Unripe', Early ripe', Ripe', Overripe', and 'Rotten', was considered. The experiments were operated under an assumption of having a limited number of samples per class per fruit (~ 10), utilizing a maximum of 5 images per class per fruit for training. Importantly, these fine-grained classes are ordinal in nature. Also, it was assumed that the dynamic distribution of data such that the data for the fruits is available sequentially in a group of three. A comparative analysis is performed on fine-grained fruit quality classification task using the MAMOR based ANN model, the MAML based model, and a transfer learning model.

For conducting detailed experiments involving the fine-grained classes, web scraping and manual selection methods were used. The plurality of images was collected for 14 types of fruits, namely, Apple, Banana, Dragon-fruit, Guava, Jack-fruit, Lemon, Lychee, Mango, Orange, Papaya, Pear, Pineapple, Pomegranate, and Strawberry. The plurality of images was labelled with five fine-grained classes, namely, 'unripe', 'early ripe', 'ripe', 'overripe', and 'rotten'. Additionally, 10 images per class were curated, totaling 50 images per fruit type and 700 images overall.

The program for MAML based model was taken from a Python library learn2learn and using various Convolutional Neural Network (CNN) architectures are employed as the base models. The evaluation encompassed VGG (Visual Geometry Group)-16, custom CNN designs, and ResNet (Residual Network)-50 pre-trained on Imagenet. Following initial testing on binary and the fine-grained fruit quality classification, the ResNet-50 model with the Imagenet weights domain-adapted using Fruits-3601 dataset demonstrated superior performance, thus serving as the base model for all subsequent experiments including the baseline transfer learning model, the MAML based model, and the MAMOR based ANN model. The hyper-parameters were tuned using GridSearch and trying random guesses. In experiments, the MAML based model, the transfer learning model, and the MAMOR based ANN model were trained on five images per class per fruit for a group of three fruits sequentially. Subsequently, the trained models were evaluated on the test dataset comprising of all the types of fruits the model had been trained. Initially, the MAML model based model , the transfer learning model, and the MAMOR based ANN model were trained on three types of fruits and evaluated on the test dataset of those three fruits, then the MAML based model, the transfer learning model, and the MAMOR based ANN model were trained on a group of three more fruits and evaluated on the test-set of all the six fruits the models has seen thus far. This process continued till all the fruit were exhausted. Throughout the evaluation, accuracy serves as the primary metric to assess the performance of all the models. The results show the accuracy is expressed as a percentage for ease of understanding.

Hypotheses: H1: The MAML based model for fine-grained quality classification of various fruits demonstrates superior performance compared to fruit-domain-adapted the transfer learning model. H2: A meta-learned model utilizing the inherent ordering of classes i.e. the MAMOR based ANN model performs better than MAML based model.

Table. 1 show result in terms of accuracy on the test dataset created using web-curated data with five fine-grained quality classes. The Models are trained on three fruits sequentially and tested on all the fruits observed so far. It can clearly be observed that the MAMOR based ANN model gives the highest accuracy.

**Table. 1**

| Fruits | Transfer Learning | MAML based Model | MAMOR based ANN model |
|---|---|---|---|
| **Apple** | | | |
| **Banana** | 20 | 74.67 | 61.33 |
| **Dragon-fruit** | | | |
| **Guava** | | | |
| **Jack-fruit** | 25.33 | 46 | 50.67 |
| **Lemon** | | | |

(continued)

| Fruits | Transfer Learning | MAML based Model | MAMOR based ANN model |
|---|---|---|---|
| Lychee | | | |
| Mango | 25.78 | 55.11 | 61.34 |
| Orange | | | |
| Papaya | | | |
| Pear | 24 | 56.34 | 58.34 |
| Pineapple | | | |
| Pomegranate | 23.5 | 55.15 | 61.42 |
| Strawberry | | | |
| Final | 23.5 | 55.15 | 61.42 |

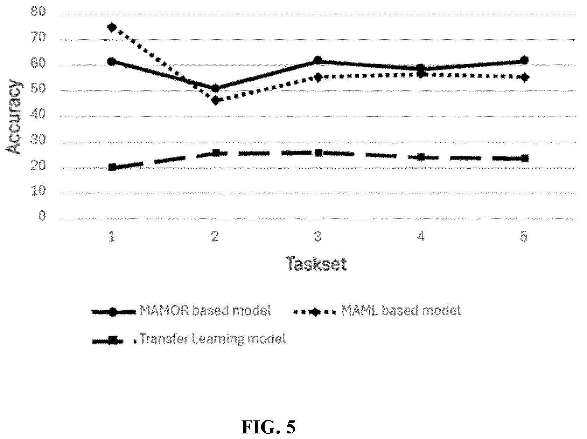

The results in Table 1 clearly demonstrate that the MAMOR based model gives superior performance when compared to the MAML based model and the transfer learning model. The transfer learning model performs very poorly as the amount of the training data is limited and dynamically available. The MAML based model performs much better than the transfer learning model as the MAML based model utilizes meta-learning and learns optimal model parameters using the few-shot learning. However, the MAML based model suffers from catastrophic forgetting as the data is dynamically available. The MAMOR based ANN model which utilizes meta-learning, and ordinal regression as well as considering the dynamic-nature of data performs the best and avoids catastrophic forgetting as depicted in FIG. 5

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The conventional multi-task ordinal regression techniques require large training data and are not specifically suitable for the dynamic data distribution settings. Embodiments herein provide a method and system for a model agnostic meta-ordinal regression (MAMOR) using dynamic Multi-Task-Conditional Ordinal Regression (DMT-CORN). The method utilizes meta-learning along with ordinal regression and develops a loss function tailored to a specific problem of multi-task multi-class image classification utilizing minimal training data. The disclosed method trains a MAMOR based ANN model on a plurality of tasksets by utilizing a DMT-CORN loss function for handling the dynamic data distribution settings.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), the method comprising:

    receiving (302), via one or more hardware processors, a plurality of tasks pertaining to a plurality of objects annotated with a plurality of image class labels, wherein the plurality of tasks comprises a dynamically distributed data received sequentially at a timestamp amongst a plurality of time stamps, in a plurality of tasksets, wherein each of the plurality of tasksets comprises a plurality of images associated with the plurality of objects, and wherein each task of the plurality of tasks in a taskset of the plurality of tasksets comprises the plurality of images corresponding to an object of the plurality of objects;

    converting (304), via one or more hardware processors, the plurality of image class labels with a first dimension (c) corresponding to the plurality of images in a training dataset to a plurality of vector ordinal levels of a second dimension (c - 1), to incorporate an ordinal information of the plurality of image class labels for training a Model Agnostic Meta Ordinal Regression (MAMOR) based Artificial Neural Network (ANN) model;

    randomly initializing (306), via one or more hardware processors, a plurality of model parameters of the MAMOR based ANN model comprising a plurality of one or more weights and a plurality of biases;

    initializing (308), via one or more hardware processors, the MAMOR based ANN model with a plurality of hyper-parameter values comprising a learning rate, a ratio of division of training data into a support dataset and a query dataset, and a strength of a Kullback-Leibler (KL) divergence in a Dynamic Multi-Task-Conditional Ordinal Regression (DMT-CORN) loss function; and

    training (310), via one or more hardware processors, the MAMOR based ANN model with each of the image of the plurality of images associated to each task of the plurality of tasks corresponding to each taskset of the plurality of tasksets of the training dataset, wherein training the MAMOR based ANN model comprises a stage-1 training and a stage-2 training, wherein the stage-1 training of the MAMOR based ANN model with each task of the plurality of tasks in the taskset of the plurality of tasksets comprises:

        (a) feeding each of the image of the plurality of images of the support dataset of the training dataset and the associated plurality of vector ordinal levels to the MAMOR based ANN model;
        (b) computing a Conditional Ordinal Regression (CORN) loss function for the task with respect to the plurality of model parameters ($\theta$) using the support dataset;
        (c) updating the plurality of model parameters using a gradient descent technique to obtain a plurality of updated model parameters $(\theta_i')$, using the CORN loss function; and
        (d) obtaining a task specific trained MAMOR based ANN model of the plurality of task specific trained MAMOR based ANN models, using the plurality of updated model parameters $(\theta_i')$.

2. The processor implemented method as claimed in claim 1, wherein the trained MAMOR based ANN model during inference predicts a vector ordinal level of the plurality of vector ordinal levels upon receiving one or more new tasks, and wherein each of the one or more new tasks comprises an image of a new object.

3. The processor implemented method as claimed in claim 1, wherein the plurality of images are extracted from one of (i) a plurality of timelapse videos, (ii) a plurality of web curated images, and (iii) a plurality of lab curated images, wherein each image of the plurality of images is annotated with a corresponding image class label of the plurality of image class labels ($c$), to generate the training dataset, and wherein the training dataset comprises the support dataset and the query dataset.

4. The processor implemented method as claimed in claim 1, wherein the plurality of vector ordinal levels comprises ranking information corresponding to the plurality of images, and wherein a final output layer of the MAMOR based ANN model is modified by removing a neuron from the final output layer of the MAMOR based ANN model such that $c$ - 1 neurons in the final output layer of the MAMOR based ANN model predicts the plurality of vector ordinal levels.

5. The processor implemented method as claimed in claim 1, wherein the stage-2 training of the MAMOR based ANN model with each task of the plurality of tasks in the taskset of the plurality of tasksets, to generate the trained MAMOR based ANN model comprises:

    (a) feeding each of the image of the plurality of images of the query dataset of the training dataset and the associated plurality of vector ordinal levels to the MAMOR based ANN model;
    (b) appending the KL divergence to the CORN loss function for handling a multi-task setting with the dynamic data distribution, to generate the DMT-CORN loss function;
    (c) computing the DMT-CORN loss function using the query dataset, the plurality of model parameters, and the plurality of task specific trained MAMOR based ANN models trained using the support dataset in the stage-1 training;
    (d) updating the plurality of model parameters by minimizing the DMT-CORN loss function, using a gradient descent technique to obtain the plurality of updated model parameters ($\theta'$); and
    (e) obtaining the trained MAMOR based ANN model using the plurality of updated model parameters.

6. A system (100), comprising:

    a memory (102) storing instructions;
    one or more communication interfaces (106); and
    one or more hardware processors (104) coupled to the memory (102) via the one or more communication interfaces (106), wherein the one or more hardware processors (104) are configured by the instructions to:

        receive a plurality of tasks pertaining to a plurality of objects annotated with a plurality of image class labels, wherein the plurality of tasks comprises a dynamically distributed data received sequentially at a timestamp amongst a plurality of time stamps, in a plurality of tasksets, wherein each of the plurality of tasksets comprises a plurality of images associated with the plurality of objects, and wherein each task of the plurality of tasks in a taskset of the plurality of tasksets comprises a plurality of images corresponding to an object of the plurality of objects;
        convert the plurality of image class labels with a first dimension ($c$) corresponding to the plurality of images in a training dataset to a plurality of vector ordinal levels of a second dimension ($c$ - 1), to incorporate an ordinal information of the plurality of image class labels for training a Model Agnostic Meta Ordinal Regression (MAMOR) based Artificial Neural Network (ANN) model;
        randomly initialize a plurality of model parameters of the MAMOR based ANN model comprising a plurality of one or more weights and a plurality of biases;
        initialize the MAMOR based ANN model with a plurality of hyper-parameter values comprising a learning rate, a ratio of division of training data into a support dataset and a query dataset, and a strength of a Kullback-Leibler (KL) divergence in a Dynamic Multi-Task-Conditional Ordinal Regression (DMT-CORN) loss function; and
        train the MAMOR based ANN model with each of the image of the plurality of images associated to each task of the plurality of tasks corresponding to each taskset of the plurality of tasksets of the training dataset, wherein training the MAMOR based ANN model comprises a stage-1 training and a stage-2 training, wherein the stage-1 training of the MAMOR based ANN model with each task of the plurality of tasks in the taskset of the plurality of tasksets comprises:

            (a) feeding each of the image of the plurality of images of the support dataset of the training dataset and the associated plurality of vector ordinal levels to the MAMOR based ANN model;
            (b) computing a Conditional Ordinal Regression (CORN) loss function for the task with respect to the plurality of model parameters ($\theta$) using the support dataset;

(c) updating the plurality of model parameters using a gradient descent technique to obtain a plurality of updated model parameters $(\theta_i')$, using the CORN loss function; and

(d) obtaining a task specific trained MAMOR based ANN model of the plurality of task specific trained MAMOR based ANN models, using the plurality of updated model parameters $(\theta_i')$.

7. The system as claimed in claim 6, wherein the trained MAMOR based ANN model during inference predicts a vector ordinal level of the plurality of vector ordinal levels upon receiving one or more new tasks, wherein each of the one or more new tasks comprises an image of a new object.

8. The system as claimed in claim 6, wherein the plurality of images are extracted from one of (i) a plurality of timelapse videos, (ii) a plurality of web curated images, and (iii) a plurality of lab curated images, wherein each image of the plurality of images is annotated with a corresponding image class label of the plurality of image class labels ($c$), to generate the training dataset, and wherein the training dataset comprises the support dataset and the query dataset.

9. The system as claimed in claim 6, wherein the plurality of vector ordinal levels comprises ranking information corresponding to the plurality of images, and wherein a final output layer of the MAMOR based ANN model is modified by removing a neuron from the final output layer of the MAMOR based ANN model such that $c$ - 1 neurons in the final output layer of the MAMOR based ANN model predicts the plurality of vector ordinal levels.

10. The system as claimed in claim 6, wherein the stage-2 training of the MAMOR based ANN model with each task of the plurality of tasks in the taskset of the plurality of tasksets, to generate the trained MAMOR based ANN model comprises:

   (a) feeding each of the image of the plurality of images of the query dataset of the training dataset and the associated plurality of vector ordinal levels to the MAMOR based ANN model;
   (b) appending the KL divergence to the CORN loss function for handling a multi-task setting with the dynamic data distribution, to generate the DMT-CORN loss function;
   (c) computing the DMT-CORN loss function using the query dataset, the plurality of model parameters, and the plurality of task specific trained MAMOR based ANN models trained using the support dataset in the stage-1 training;
   (d) updating the plurality of model parameters by minimizing the DMT-CORN loss function, using a gradient descent technique to obtain the plurality of updated model parameters ($\theta$'); and
   (e) obtaining the trained MAMOR based ANN model using the plurality of updated model parameters.

11. One or more non-transitory machine-readable information storage mediums comprising one or more instructions which when executed by one or more hardware processors cause:

   receiving a plurality of tasks pertaining to a plurality of objects annotated with a plurality of image class labels, wherein the plurality of tasks comprises a dynamically distributed data received sequentially at a timestamp amongst a plurality of time stamps, in a plurality of tasksets, wherein each of the plurality of tasksets comprises a plurality of images associated with the plurality of objects, and wherein each task of the plurality of tasks in a taskset of the plurality of tasksets comprises the plurality of images corresponding to an object of the plurality of objects;
   converting the plurality of image class labels with a first dimension ($c$) corresponding to the plurality of images in a training dataset to a plurality of vector ordinal levels of a second dimension ($c$ - 1), to incorporate an ordinal information of the plurality of image class labels for training a Model Agnostic Meta Ordinal Regression (MAMOR) based Artificial Neural Network (ANN) model;
   randomly initializing a plurality of model parameters of the MAMOR based ANN model further comprising a plurality of one or more weights and a plurality of biases;
   initializing the MAMOR based ANN model with a plurality of hyper-parameter values further comprising a learning rate, a ratio of division of training data into a support dataset and a query dataset, and a strength of a Kullback-Leibler (KL) divergence in a Dynamic Multi-Task-Conditional Ordinal Regression (DMT-CORN) loss function; and
   training the MAMOR based ANN model with each of the image of the plurality of images associated to each task of the plurality of tasks corresponding to each taskset of the plurality of tasksets of the training dataset, wherein training the MAMOR based ANN model comprises a stage-1 training and a stage-2 training, wherein the stage-1 training of the MAMOR based ANN model with each task of the plurality of tasks in the taskset of the plurality of tasksets comprises:

(a) feeding each of the image of the plurality of images of the support dataset of the training dataset and the associated plurality of vector ordinal levels to the MAMOR based ANN model;
(b) computing a Conditional Ordinal Regression (CORN) loss function for the task with respect to the plurality of model parameters ($\theta$) using the support dataset;
(c) updating the plurality of model parameters using a gradient descent technique to obtain a plurality of updated model parameters $(\theta_i')$, using the CORN loss function; and
(d) obtaining a task specific trained MAMOR based ANN model of the plurality of task specific trained MAMOR based ANN models, using the plurality of updated model parameters $(\theta_i')$.

12. The one or more non-transitory machine-readable information storage mediums as claimed in claim 11, wherein the trained MAMOR based ANN model during inference predicts a vector ordinal level of the plurality of vector ordinal levels upon receiving one or more new tasks, and wherein each of the one or more new tasks comprises an image of a new object.

13. The one or more non-transitory machine-readable information storage mediums as claimed in claim 11, wherein the plurality of images are extracted from one of (i) a plurality of timelapse videos, (ii) a plurality of web curated images, and (iii) a plurality of lab curated images, wherein each image of the plurality of images is annotated with a corresponding image class label of the plurality of image class labels ($c$), to generate the training dataset, and wherein the training dataset comprises the support dataset and the query dataset.

14. The one or more non-transitory machine-readable information storage mediums as claimed in claim 11, wherein the plurality of vector ordinal levels comprises ranking information corresponding to the plurality of images, and wherein a final output layer of the MAMOR based ANN model is modified by removing a neuron from the final output layer of the MAMOR based ANN model such that $c$ - 1 neurons in the final output layer of the MAMOR based ANN model predicts the plurality of vector ordinal levels.

15. The one or more non-transitory machine-readable information storage mediums as claimed in claim 11, wherein the stage-2 training of the MAMOR based ANN model with each task of the plurality of tasks in the taskset of the plurality of tasksets, to generate the trained MAMOR based ANN model comprises:

(a) feeding each of the image of the plurality of images of the query dataset of the training dataset and the associated plurality of vector ordinal levels to the MAMOR based ANN model;
(b) appending the KL divergence to the CORN loss function for handling a multi-task setting with the dynamic data distribution, to generate the DMT-CORN loss function;
(c) computing the DMT-CORN loss function using the query dataset, the plurality of model parameters, and the plurality of task specific trained MAMOR based ANN models trained using the support dataset in the stage-1 training;
(d) updating the plurality of model parameters by minimizing the DMT-CORN loss function, using a gradient descent technique to obtain the plurality of updated model parameters ($\theta$'); and
(e) obtaining the trained MAMOR based ANN model using the plurality of updated model parameters.

SYSTEM

100

MEMORY

102

DATABASE

108

HARDWARE

PROCESSOR(S)

104

I/O INTERFACE(S)

106

**FIG. 1**

FIG. 2

300

Receiving a plurality of tasks pertaining to a plurality of objects annotated with a plurality of image class labels (302)

Converting the plurality of image class labels with a first dimension (c) corresponding to a plurality of images in a training dataset to a plurality of vector ordinal levels of a second dimension (c-1), to incorporate an ordinal information of the plurality of image class labels for training a Model Agnostic Meta Ordinal Regression (MAMOR) based Artificial Neural Network (ANN) model (304)

Randomly initializing a plurality of model parameters of the MAMOR based ANN model comprising a plurality of one or more weights and a plurality of biases (306)

Initializing the MAMOR based ANN model with a plurality of hyper-parameter values comprising a learning rate, a ratio of division of training data into a support dataset and a query dataset, and a strength of a Kullback-Leibler (KL) divergence in a Dynamic Multi Task-Conditional Ordinal Regression (DMT-CORN) loss function (308)

Training the MAMOR based ANN model with each of the image of the plurality of images associated to each task of the plurality of tasks corresponding to each task set of the plurality of task sets of the training dataset, wherein training the MAMOR based ANN model comprises a stage-1 training and a stage-2 training (310)

**FIG. 3**

INFERENCE

**FIG. 4**

**FIG. 5**

Europäisches
Patentamt

European
Patent Office

Office européen
des brevets

# EUROPEAN SEARCH REPORT

**Application Number**

EP 25 18 4355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XINTONG SHI ET AL: "Deep Neural Networks for Rank-Consistent Ordinal Regression Based On Conditional Probabilities", ARXIV.ORG, CORNELL UNIVERSITY LIBRARY, 201 OLIN LIBRARY CORNELL UNIVERSITY ITHACA, NY 14853, 1 June 2023 (2023-06-01), XP091525434, | 1-4,6-9, 11-14 | INV. G06N3/084 G06N3/09 G06N3/0985 |
| Y | Equation (5); * abstract; figure S2; table 1 * * page 1 - page 8 * * page 20 * | 5,10,15 | |
| Y | Finn Chelsea ET AL: "Model-Agnostic Meta-Learning for Fast Adaptation of Deep Networks", , 18 July 2017 (2017-07-18), pages 1-13, XP055912177, Retrieved from the Internet: URL:https://arxiv.org/pdf/1703.03400.pdf [retrieved on 2022-04-12] * Sections 1, 2, 3.1 * | 5,10,15 | |

-----

-----

**TECHNICAL FIELDS SEARCHED (IPC)**

G06N

The present search report has been drawn up for all claims

| Place of search | Date of completion of the search | Examiner |
|---|---|---|
| The Hague | 19 November 2025 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421058040